# EUROPÄISCHE PATENTSCHRIFT

(11) **EP 3 546 258 B1**
(45) Veröffentlichungstag und Bekanntmachung des Hinweises auf die Patenterteilung: **30.09.2020**
(21) Anmeldenummer: 19159325.0
(22) Anmeldetag: 26.02.2019
(51) Int. Cl.: B60H 1/34, F24F 13/14

(54) **LUFTAUSSTRÖMER**
AIR VENT
DISPOSITIF D'ÉCOULEMENT D'AIR

(30) Priorität: 13.03.2018 DE 102018105747
(43) Veröffentlichungstag der Anmeldung: 02.10.2019
(73) Patentinhaber: fischer automotive systems GmbH & Co. KG, 72160 Horb a.N. (DE)
(72) Erfinder: Bastian, Ulf-Lothar, 72285 Pfalzgrafenweiler (DE); Schaal, Falk, 72290 Loßburg (DE)
(74) Vertreter: Suchy, Ulrich Johannes

(56) Entgegenhaltungen:
- EP-A1- 3 290 245
- DE-A1-102017 111 011
- DE-B3-102013 210 055
- FR-A1- 2 760 694

## Beschreibung

Die Erfindung betrifft einen Luftausströmer mit den Merkmalen des Oberbegriffs des Anspruchs 1. Der Luftausströmer ist zu einer Belüftung eines Fahrgastraums eines Kraftwagens mit kalter oder warmer Luft vorgesehen und wird typischerweise in ein Armaturenbrett so eingebaut, dass Luftaustrittsöffnungen des Luftausströmers bündig mit dem Armaturenbrett sind. Andere Verwendungen des Luftausströmers sind nicht ausgeschlossen.

Die französische Patentanmeldung FR 3 054 491 A1 offenbart einen Luftausströmer mit einem Luftkanal, der sich in zwei Luftkanäle teilt. Von einer Verzweigungsstelle ausgehend verlaufen die beiden Luftkanäle bogenförmig zunächst auseinander und anschließend wieder schräg aufeinander zu, so dass Luftströme durch die beiden Luftkanäle, die durch Luftaustrittsöffnungen der beiden Luftkanäle aus den beiden Luftkanälen ausströmen, schräg zueinander zusammenströmen und sich zu einem Luftstrom vereinigen. Eine Richtung des vereinigten Luftstroms wird durch ein Verhältnis von Luftmengen, die die beiden Luftkanäle durchströmen, bestimmt oder mitbestimmt: Ist die durch einen der beiden Luftkanäle strömenden Luftmenge größer als im anderen Luftkanal, wird der vereinigte Luftstrom in die entsprechende Richtung gelenkt.

Aus der Offenlegungsschrift DE 10 2017 111011 A1 ist ein gattungsgemäßer Luftausströmer mit zwei Luftkanälen bekannt, die je eine Luftaustrittsöffnung aufweisen und die zu den Luftaustrittsöffnungen hin schräg in einer vorgesehenen Durchströmungsrichtung von Luft durch die Luftkanäle und aufeinander zu verlaufen, so dass durch die beiden Luftaustrittsöffnungen aus den Luftkanälen ausströmende Luftströme zu einem gemeinsamen Luftstrom zusammen strömen. Der Luftausströmer weist zudem jeweils ein bewegliches Sperrelement für jeden Luftkanal auf. Mit den Sperrelementen lassen sich Luftdurchtrittsquerschnitte der beiden Luftkanäle einzeln verkleinern.

Weitere Luftausströmer sind aus den Patentanmeldungen EP 3 290 245 A1, FR 2 760 694 A1 und der Patentschrift DE 10 2013 210055 B3 bekannt.

In einer Durchströmungsrichtung durch den aus der französischen Patentanmeldung FR 3 054 491 A1 bekannten Luftausströmer vor der Teilung in zwei Luftkanäle, das heißt in dem Luftkanal zwischen einer Lufteintrittsöffnung und der Verzweigungsstelle, sind zwei Sperrklappen angeordnet, die um eine gemeinsame Schwenkachse schwenkbar sind. Mit einer komplizierten mechanischen Steuerung sind die beiden Sperrklappen zwischen einer aneinander anliegenden und einer V-förmig auseinanderstehenden Stellung und, wenn sie aneinander anliegen, gemeinsam hin und her schwenkbar. Durch Auseinanderschwenken der Sperrklappen versperren die Sperrklappen den bzw. die Luftkanäle. Werden die beiden Sperrklappen gemeinsam in einer Richtung geschwenkt, versperren sie einen der beiden Luftkanäle, so dass Luft durch den anderen Luftkanal strömt und entsprechend seines schrägen Verlaufs zur Luftaustrittsöffnung schräg aus dem Luftausströmer ausströmt.

Aufgabe der Erfindung ist, einen Luftausströmer mit einer vereinfachten Steuermechanik vorzuschlagen.

Diese Aufgabe wird erfindungsgemäß durch die Merkmale des Anspruchs 1 gelöst. Der erfindungsgemäße Luftausströmer weist zwei Luftkanäle mit jeweils einer Luftaustrittsöffnung auf. Denkbar ist auch, dass ein oder beide Luftkanäle mehrere Luftaustrittsöffnungen aufweisen. Die Luftaustrittsöffnungen können unmittelbar oder mit Abstand neben- bzw. übereinander angeordnet sein. Zu den Luftaustrittsöffnungen hin verlaufen die beiden Luftkanäle schräg aufeinander zu, so dass Luftströme, die die beiden Luftkanäle durchströmen und durch die Luftaustrittsöffnungen ausströmen, schräg aufeinander zu und zusammenströmen und sich zu einem Luftstrom vereinigen. Ist die Luftmenge in einem Luftkanal größer, lenkt das den vereinigten Luftstrom aus dem Luftausströmer nach den Luftaustrittsöffnungen schräg in die entsprechende Richtung.

Zu einer Steuerung der Luftmengen in den beiden Luftkanälen und damit zum Lenken des vereinigten Luftstroms aus dem Luftausströmer nach den Luftaustrittsöffnungen weist der erfindungsgemäße Luftausströmer für jeden Luftkanal ein bewegliches Sperrelement auf. Der Luftausströmer kann auch mehrere Sperrelemente für einen oder beide Luftkanäle aufweisen. Insbesondere sind die Sperrelemente schwenkbar, vorzugsweise sind sie schwenkbare Klappen. Die Sperrelemente können in einer vorgesehenen Durchströmungsrichtung vor bzw. an einem Anfang der beiden Luftkanäle, also im Bereich der Verzweigungsstelle, an der sich der Luftkanal in die beiden Luftkanäle teilt, oder in den beiden Luftkanälen angeordnet sein. Die Sperrelemente können an einem Anfang an grundsätzlich beliebiger Stelle zwischen dem Anfang und einem Ende oder am Ende der Luftkanäle angeordnet sein. Durch einzelnes oder gemeinsames Bewegen der Sperrelemente lassen sich Luftdurchtrittsquerschnitte der beiden Luftkanäle einzeln oder gemeinsam ändern, wobei durch gemeinsames Bewegen der Sperrelemente die Luftdurchtrittsquerschnitte gemeinsam vergrößert und verkleinert und/oder der Luftdurchtrittsquerschnitt eines Luftkanals vergrößert und der Luftdurchtrittsquerschnitt des anderen Luftkanals verkleinert werden kann.

Zum Bewegen der Sperrelemente, was auch als Steuern der Sperrelemente und der die beiden Luftkanäle durchströmenden Luftmengen aufgefasst werden kann, weist der erfindungsgemäße Luftausströmer eine Kurvensteuerung mit einer drehbaren Steuerscheibe mit einer Steuerkurve für ein zugeordnetes Sperrelement auf. Die Steuerkurven der Sperrelemente der beiden Luftkanäle sind verschieden, der Luftausströmer weist (mindestens) zwei Steuerkurven auf. Die Steuerscheibe kann beide Steuerkurven aufweisen oder es sind mehrere Steuerscheiben vorhanden. Die Kurvensteuerung kann als eine Kurvensteuerung, die beide Steuerkurven umfasst, oder als zwei Kurvensteuerungen mit jeweils einer Steuerkurve aufgefasst werden. Bei einer Drehung der Steuerscheibe/n werden die Steuerkurven durchlaufen, beispielsweise bewegen sich Steuerelemente der Sperrelemente, die mit den Steuerkurven zusammenwirken, bei der Drehung der Steuerscheibe/n entlang der Steuerkurven. Beim Durchlaufen der Steuerkurven durch Drehung der Steuerscheibe/n bewegt die Kurvensteuerung die Sperrelemente.

Eine Ausgestaltung der Erfindung sieht Steuerelemente an den Sperrelementen vor, die mit der zugeordneten Steuerkurven zusammenwirken. Die Steuerelemente sind beispielsweise Zapfen oder Nasen, die an der Steuerkurve anliegen oder in die Steuerkurve eingreifen. Bei der Drehung der Steuerkurven durch Drehung der Steuerscheibe/n bewegen sich die Steuerelemente an den Steuerkurven entlang, wobei sich tatsächlich die Steuerkurven bewegen. Diese Bewegung der Steuerelemente entlang der Steuerkurven bzw. umgekehrt der Steuerkurven entlang der Steuerelemente kann auch als "Durchlaufen" der Steuerkurven aufgefasst werden. In kreisbogenförmigen Abschnitten der Steuerkurven konzentrisch, das heißt mit gleichbleibendem Radius um eine Drehachse der Steuerscheibe/n herum, werden die Sperrelemente nicht bewegt.

Bewegt werden die Sperrelemente in solchen Abschnitten der Steuerkurven, in denen sich die Steuerkurven von der/den Drehachse/n der Steuerscheibe/n entfernen oder sich der/den Drehachse/n nähern.

Eine Ausgestaltung der Erfindung sieht Steuerkurven mit gemeinsam durchlaufenen Abschnitten vor, die ein Sperrelement bewegen und das andere Sperrelement nicht, und/oder gemeinsam durchlaufene Abschnitte, die beide Sperrelemente bewegen. Es können Abschnitte, die beide Sperrelemente gleichsinnig und/oder Abschnitte, die beide Sperrelemente gegensinnig bewegen, vorhanden sein. Dabei soll "gleichsinnig" als Verkleinern oder Vergrößern der Luftdurchtrittsquerschnitte beider Luftkanäle und "gegensinnig" als Vergrößern des Luftdurchtrittsquerschnitts eines und gleichzeitiges Verkleinern des Luftdurchtrittsquerschnitts des anderen Luftkanals verstanden werden.

Vorzugsweise sind die Steuerkurven drehfest miteinander, wofür eine Ausgestaltung der Erfindung zwei Steuerscheiben mit jeweils einer Steuerkurve aufweist, denen jeweils ein Sperrelement zugeordnet ist.

Die Erfindung wird nachfolgend anhand in der Zeichnung dargestellter Ausführungsbeispiele näher erläutert. Es zeigen:
- Figur 1: ein erstes Ausführungsbeispiel eines erfindungsgemäßen Luftausströmers in einer perspektivischen und teilweise aufgeschnittenen Darstellung;
- Figur 2: Steuerscheiben einer Kurvensteuerung des Luftausströmers aus Figur 1;
- Figuren 3 bis 6: den Luftausströmer aus Figur 1 mit Sperrelementen in verschiedenen Stellungen in einer Seitenansicht; und
- Figuren 7 und 8: als weitere Ausführungsbeispiele den Luftausströmer aus Figur 1 mit anders angeordneten Sperrelementen in Seitenansicht.

Die Figuren sind vereinfachte und schematisierte Darstellungen.

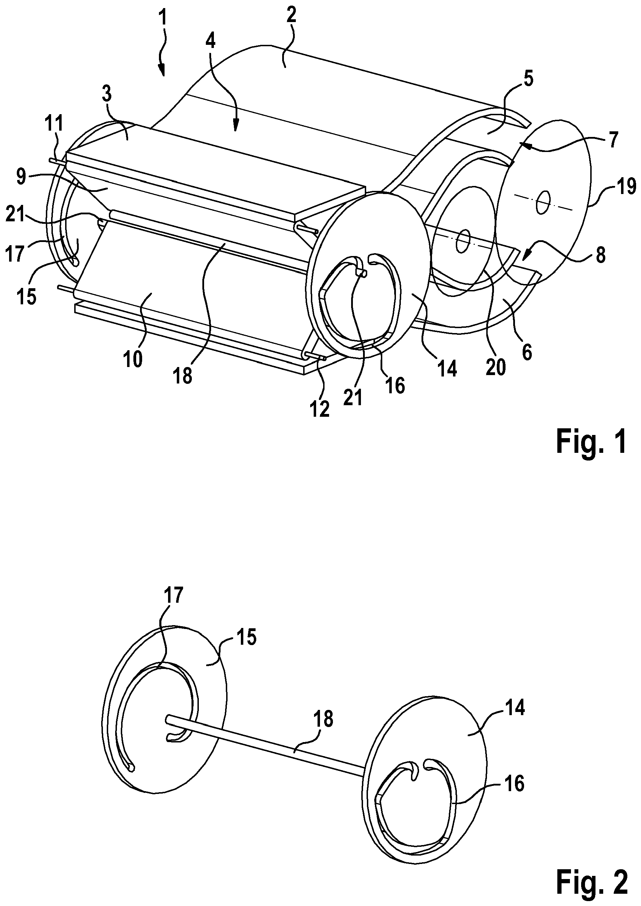

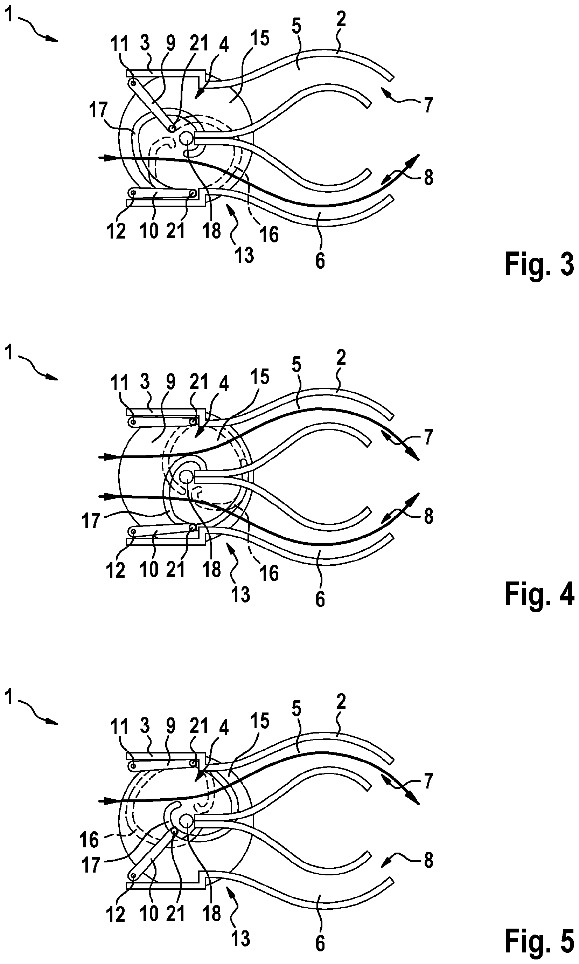

Der in Figur 1 dargestellte, erfindungsgemäße Luftausströmer 1 ist zu zu einem Einbau in ein Armaturenbrett eines nicht dargestellten Kraftwagens zu einer Belüftung eines Fahrgastraums des Kraftwagens vorgesehen. Er weist ein rechteckrohrförmiges Gehäuse 2 mit sich ändernder Höhe und im Ausführungsbeispiel gleichbleibender Breite auf. Das Gehäuse 2 bildet einen Lufteintrittskanal 3, der sich an einer Verzweigungsstelle 4 in einen ersten Luftkanal 5 und einen zweiten Luftkanal 6 teilt. Das Gehäuse 2 ist ohne Seitenwände gezeichnet. Die beiden Luftkanäle 5, 6, die ebenfalls rechteckrohrförmige Querschnitte aufweisen, verlaufen in einer vorgesehenen Durchströmungsrichtung durch den Luftausströmer 1 von der Verzweigungsstelle 4 ausgehend bogenförmig zunächst schräg auseinander und anschließend wieder schräg in der vorgesehenen Durchströmungsrichtung und aufeinander zu. Der erste Lufkanal 5 endet mit einer ersten Luftaustrittsöffnung 7 und der zweite Luftkanal 6 mit einer zweiten Luftaustrittsöffnung 8. Die Luftaustrittsöffnungen 7, 8 weisen im Ausführungsbeispiel einen Abstand voneinander auf, können allerdings auch ohne Abstand voneinander angeordnet sein. In der vorgesehenen Durchströmungsrichtung durch die beiden Luftkanäle 5, 6 strömende Luftströme strömen wie in Figur 4 zu sehen schräg aufeinander zu, aus den beiden Luftaustrittsöffnungen 7, 8 aus und vereinigen sich zu einem gemeinsamen Luftstrom aus dem Luftausströmer 1.

An der Verzweigungsstelle 4, an der sich der Lufteintrittskanal 3 in die beiden Luftkanäle 5, 6 teilt, weist der Luftausströmer 1 für jeden der beiden Luftkanäle 5, 6 eine schwenkbare Klappe als Sperrelement 9, 10 auf, nämlich ein erstes Sperrlement 9 für den ersten Luftkanal 5 und ein zweites Sperrelement für den zweiten Luftkanal 6. Die beiden Klappen sind um Lagerzapfen 11, 12 schwenkbar, nämlich einem ersten Lagerzapfen 11 für das erste Sperrelement 9 und einem zweiten Lagerzapfen 12 für das zweite Sperrelement 10, die in Lagerlöchern in den nicht dargestellten Seitenwänden des Gehäuses 2 gelagert sind. In Figur 1 befinden sich die Lagerzapfen 11, 12, die Schwenkachsen der die Sperrelemente 9, 10 bildenden Klappen definieren, an in der vorgesehenen Durchströmungsrichtung des Luftausströmers 1 vorderen Rändern der Sperrelemente 9, 10. In Figur 1 befinden sich die ersten Lagerzapfen 11 des ersten Sperrelements 9 an einer Oberseite und die zweiten Lagerzapfen 12 des zweiten Sperrelements 10 an einer Unterseite des Gehäuses 1. Durch Schwenken der Sperrelemente 9, 10 lassen sich Luftdurchtrittsquerschnitte der beiden Luftkanäle 5, 6 einzeln verkleinern.

Zum Schwenken der Sperrelemente 5, 6 weist der erfindungsgemäße Luftausströmer 1 eine Kurvensteuerung 13 mit zwei ebenen und im Ausführungsbeispiel kreisförmigen Steuerscheiben 14, 15 auf, nämlich einer ersten Steuerscheibe 14 mit einer ersten Steuerkurve 16 für das erste Sperrelement 9 und einer zweiten Steuerscheibe 15 mit einer zweiten Steuerkurve 17 für das zweite Sperrelement 10. Die beiden Steuerscheiben 14, 15 sind drehfest auf einer Welle 18 angeordnet, so dass die beiden Steuerscheiben 14, 15 und die beiden Steuerkurven 16, 17 drehfest miteinander sind. Die Welle 18 mit den beiden die Steuerkurven 16, 17 aufweisenden Steuerscheiben 14, 15 ist in Figur 2 einzeln zu sehen. Die Steuerscheiben 14, 15 sind an den nicht gezeichneten Seitenwänden des Gehäuses 2 des Luftausströmers 1 angeordnet, die Welle 18 befindet sich in einer Mitte zwischen der Oberseite und der Unterseite des Gehäuses 1 und ist in den Seitenwänden des Gehäuses 1 drehbar gelagert.

Ein Drehantrieb der Steuerscheiben 14, 15 erfolgt im Ausführungsbeispiel von Hand mittels eines Handrads 19 über ein Zwischenrad 20, die beide drehbar an einer der beiden Seitenwände des Gehäuses 1 gelagert sind und die aufeinander wälzen. Das Handrad 19 steht etwas über die Luftaustrittsöffnungen 7, 8 über und bei in vorgesehener Weise in ein Armaturenbrett eingebautem Luftausströmer 1 aus dem Armaturenbrett vor. Der Drehantrieb der Steuerscheiben 14, 15 kann auch mittels eines Motors, insbesondere eines Elektromotors erfolgen (nicht dargestellt).

Jedes der beiden Sperrelemente 9, 10 weist einen seitlich abstehenden Zapfen auf, der als Steuerelement 21 in die Steuerkurve 16, 17 einer der beiden Steuerscheiben 15, 16 eingreift. Die Steuerkurven 16, 17 verlaufen abschnittsweise kreisbogenförmig konzentrisch zur Welle 18, die eine Drehachse der beiden Steuerscheiben 14, 15 definiert, das heißt mit konstantem Radius zur Welle 18. Auf anderen Abschnitten verlaufen die Steuerkurven 16, 17 bogenförmig nach innen bzw. nach außen, so dass durch Drehung der Steuerscheiben 14, 15 und mit ihnen der Steuerkurven 16, 17 die beiden als schwenkbare Klappen ausgebildeten Sperrelemente 9, 10 geschwenkt werden. Die Bewegung der Steuerelemente 21 in den Steuerkurven 14, 15 bzw. die Bewegung bzw. Drehung der Steuerkurven 16, 17 in Bezug zu den Steuerelementen 21 kann auch als Durchlaufen der Steuerkurven 16, 17 aufgefasst werden.

Ausgehend von einer in Figur 3 gezeigten Stellung, bei der das erste Sperrelement 9 schräg von der Oberseite zur Mitte des Gehäuses 2 steht und einen der beiden Luftkanäle 5 versperrt und das zweite Sperrelement 10 innen an der Unterseite des Gehäuses 2 des Luftausströmers 1 anliegt, schwenkt durch Drehen der Steuerscheiben 14, 15 das erste Sperrelement 9 nach oben innen an die Oberseite des Gehäuses 2, so dass, wie in Figur 4 zu sehen, beide Luftkanäle 5, 6 offen sind. In den Figuren 3 bis 6 ist die in Blickrichtung vordere, erste Steuerscheibe 14 durchsichtig und ihre ersten Steuerkurven 16 mit Strichlinien gezeichnet. Das Zwischenrad 20 und das Handrad 19 sind in Figuren 3 bis 6 nicht gezeichnet. Wie in Figur 4 durch Pfeile dargestellt, strömen Luftströme durch die beiden Luftkanäle 5, 6 schräg aufeinander zu aus den Luftaustrittsöffnungen 7, 8 der Luftkanäle 5, 6 aus und vereinigen sich zu einem gemeinsamen Luftstrom. Ist, wie in Figuren 3 und 5 zu sehen, nur einer der beiden Luftkanäle 5, 6 offen, tritt der Luftstrom entsprechend schräg aus der jeweiligen Luftaustrittsöffnung 7, 8 aus. Durch Sperren oder teilweises Sperren eines der beiden Luftkanäle 5, 6 wird der vereinigte Luftstrahl hinter den Luftaustrittsöffnungen 7, 8 schräg in die entsprechende Richtung abgelenkt.

Bei einem Weiterdrehen der Steuerscheiben 14, 15 schwenkt, wie in Figur 5 zu sehen, dass zweite Sperrelement 10 nach oben und sperrt den zweiten Luftkanal 6. Das erste Sperrelement 9 verbleibt dabei innen an der Oberseite des Gehäuses 2, so dass der zugeordnete erste Luftkanal 5 offen bleibt. Werden die Steuerscheiben 14, 15 noch weiter gedreht, schwenkt das erste Sperrelement 9 wieder schräg nach innen, so dass beide Luftkanäle 5, 6 gesperrt sind und keine Luft durch den Luftausströmer 1 strömt.

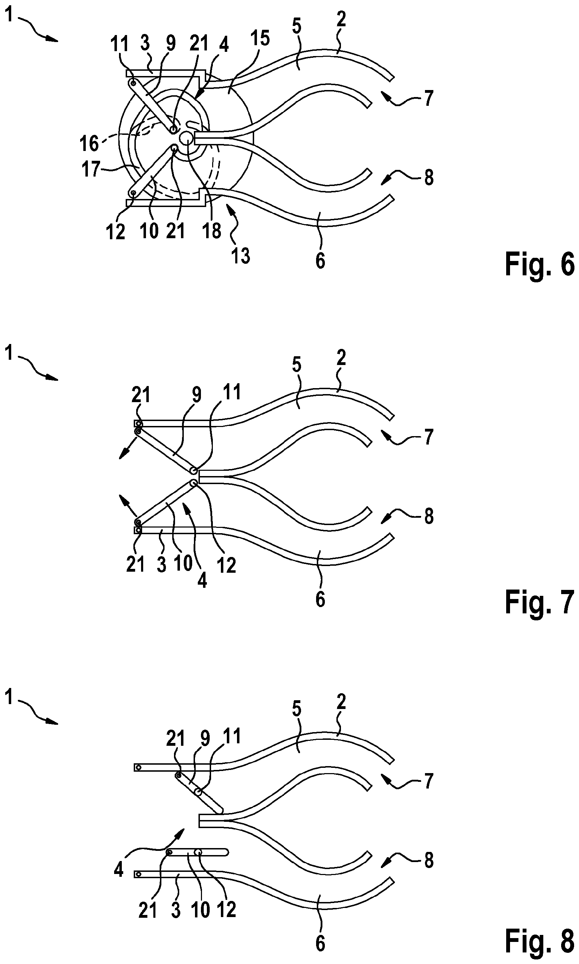

Die Sperrelemente 9, 10 können anders angeordnet sein. Die Figuren 7 und 8 zeigen dafür zwei Beispiele: In Figur 7 befinden sich die Lagerzapfen 11, 12 der Sperrelemente 9, 10 an den in der vorgesehenen Durchströmungsrichtung durch den Luftausströmer 1 hinteren Rändern der Sperrelemente 9, 10 und in einer Mitte zwischen der Oberseite und der Unterseite des Gehäuses 2. Die Steuerelemente 21 befinden sich an den in der vorgesehenen Durchströmungsrichtung vorderen Rändern der Sperrelemente 9, 10. Zum Öffnen der beiden Luftkanäle 5, 6 werden die beiden Sperrelemente 9, 10 in die Mitte des Gehäuses 2 geschwenkt. Im Übrigen funktioniert der Luftausströmer 1 aus Figur 7 in gleicher Weise wie der Luftausströmer 1 aus Figuren 1 bis 6 und es wird auf die obigen Erläuterungen verwiesen.

In Figur 8 sind die Sperrelemente 9, 10 in ihren Mitten und in Mitten der beiden Luftkanäle 5, 6 schwenkbar gelagert. Die Steuerelemente 21 können an den in der Durchströmungsrichtung vorderen oder hinteren Rändern der Sperrelemente 9, 10 angeordnet sein. Auch bei diesem Ausführungsbeispiel der Erfindung funktioniert die in Figur 8 nicht gezeichnete Kurvensteuerung 13 wie zu Figuren 1 bis 6 erläutert. In Figur 8 sind die beiden Sperrelemente 9, 10 im Bereich der Verzweigungsstelle 4 des Lufteintrittskanals 3 in die beiden Luftkanäle 5, 6 und damit am Anfang der Luftkanäle 5, 6 angeordnet. Sie lassen sich allerdings auch weiter hinten in den Luftkanälen 5, 6 an beliebiger Stelle zwischen deren Anfang und deren Enden an den Luftaustrittsöffnungen 7, 8 anordnen (nicht dargestellt).

Die Steuerscheiben 14, 15 mit den Steuerkurven 16, 17, das Handrad 19 und das Zwischenrad 20 sind in Figuren 7 und 8 nicht gezeichnet.

### Bezugszeichenliste

- 1: Luftausströmer
- 2: Gehäuse
- 3: Lufteintrittskanal
- 4: Verzweigungsstelle
- 5: erster Luftkanal
- 6: zweiter Luftkanal
- 7: erste Luftaustrittsöffnung
- 8: zweite Luftaustrittsöffnung
- 9: erstes Sperrelement
- 10: zweites Sperrelement
- 11: erster Lagerzapfen
- 12: zweiter Lagerzapfen
- 13: Kurvensteuerung
- 14: erste Steuerscheibe
- 15: zweite Steuerscheibe
- 16: erste Steuerkurve
- 17: zweite Steuerkurve
- 18: Welle
- 19: Handrad
- 20: Zwischenrad
- 21: Steuerelement

## Patentansprüche

1. Luftausströmer (1), mit zwei Luftkanälen (5, 6), die je eine Luftaustrittsöffnung (7, 8) aufweisen und die zu den Luftaustrittsöffnungen (7, 8) hin schräg in einer vorgesehenen Durchströmungsrichtung von Luft durch die Luftkanäle (5, 6) und aufeinander zu verlaufen, so dass durch die beiden Luftaustrittöffnungen (7, 8) aus den Luftkanälen (5, 6) ausströmende Luftströme zu einem gemeinsamen Luftstrom zusammen strömen, und mit jeweils einem beweglichen Sperrelement (9, 10) für jeden Luftkanal (5, 6), mit denen sich Luftdurchtrittsquerschnitte der beiden Luftkanäle (5, 6) einzeln verkleinern lassen, **dadurch gekennzeichnet, dass** der Luftausströmer (1) für jedes Sperrelement (9, 10) eine Kurvensteuerung (13) mit einer drehbaren Steuerscheibe (14, 15) mit einer Steuerkurve (16, 17) für das zugeordnete Sperrelement (9, 10) aufweist, mit der das jeweilige Sperrelement (9, 10) bewegbar ist, wobei die Steuerkurven (16, 17) bei einer Drehung der Steuerscheibe (14, 15) durchlaufen werden.

2. Luftausströmer (1) nach Anspruch 1, **dadurch gekennzeichnet, dass** die Sperrelemente (9, 10) Steuerelemente (21) aufweisen, die mit der zugeordneten Steuerkurve (16, 17) zusammenwirken und die sich bei Drehung der Steuerscheibe (14, 15) entlang der Steuerkurven (16, 17) bewegen, so dass die Sperrelemente (9, 10) bewegt werden.

3. Luftausströmer (1) nach Anspruch 1 oder 2, **dadurch gekennzeichnet, dass** die Steuerkurven (16, 17) gemeinsam durchlaufene Abschnitte aufweisen, mit denen sie ein Sperrelement (9, 10) bewegen während ein anderes Sperrelement (10, 9) still steht und/oder dass die Steuerkurven (16, 17) gemeinsam durchlaufene Abschnitte aufweisen, in denen sie beide Sperrelemente (9, 10) gleichsinnig bewegen und/oder dass die Steuerkurven (16, 17) gemeinsam durchlaufende Abschnitte aufweisen, in denen sie beide Sperrelemente (9, 10) gegensinnig bewegen.

4. Luftausströmer (1) nach einem oder mehreren der Ansprüche 1 bis 3, **dadurch gekennzeichnet, dass** die Steuerkurven (16, 17) drehfest miteinander sind.

5. Luftausströmer (1) nach einem oder mehreren der vorhergehenden Ansprüche, **dadurch gekennzeichnet, dass** der Luftausströmer (1) zwei gleichachsige Steuerscheiben (14, 15) aufweist, von denen jeweils eine Steuerscheibe (14, 15) eine Steuerkurve (16, 17) für das zugeordnete Sperrelement (9, 10) aufweist.

6. Luftausströmer (1) nach einem oder mehreren der vorhergehenden Ansprüche, **dadurch gekennzeichnet, dass** die Sperrelemente (9, 10) schwenkbar, insbesondere schwenkbare Klappen, sind.

## Claims

1. Air vent (1), having two air ducts (5, 6) which each have an air-outlet opening (7, 8) and which run obliquely towards the air-outlet openings (7, 8) in an intended direction of airflow through the air ducts (5, 6) and towards one another, so that air currents flowing out of the air ducts (5, 6) through the two air-outlet openings (7, 8) converge to form a common air current, and having for each air duct (5, 6) a movable blocking element (9, 10) with which air-flow cross-sections of the two air ducts (5, 6) can be individually reduced in size, **characterised in that** the air vent (1) has for each blocking element (9, 10) a cam control means (13) having a rotatable control disc (14, 15) with a control cam (16, 17) for the associated blocking element (9, 10), with which control cam the respective blocking element (9,10) is movable, the control cams (16, 17) being traversed on rotation of the control disc (14, 15).

2. Air vent(1) according to claim 1, **characterised in that** the blocking elements (9, 10) have control elements (21) which co-operate with the associated control cam (16, 17) and which, on rotation of the control disc (14, 15), move along the control cams (16, 17) so that the blocking elements (9, 10) are moved.

3. Air vent(1) according to claim 1 or 2, **characterised in that** the control cams (16, 17) have jointly traversed sections with which they move one blocking element (9, 10) while another blocking element (10, 9) is stationary, and/or the control cams (16, 17) have jointly traversed sections in which they move both blocking elements (9, 10) in the same direction, and/or the control cams (16, 17) have jointly traversed sections in which they move both blocking elements (9, 10) in opposite directions.

4. Air vent (1) according to one or more of claims 1 to 3, **characterised in that** the control cams (16, 17) are fixed against rotation relative to one another.

5. Air vent (1) according to one or more of the preceding claims, **characterised in that** the air vent (1) has two coaxial control discs (14, 15), of which each control disc (14, 15) has a control cam (16, 17) for the associated blocking element (9, 10).

6. Air vent (1) according to one or more of the preceding claims, **characterised in that** the blocking elements (9, 10) are pivotable, especially being pivotable flaps.

## Revendications

1. Bouche d'aération (1) comprenant deux canaux (5, 6) de circulation d'air qui sont respectivement munis d'un orifice (7, 8) de sortie d'air, s'étendent à l'oblique vers les orifices (7, 8) de sortie d'air, dans une direction prévue d'écoulement d'air parcourant lesdits canaux (5, 6) de circulation d'air, et pointent en direction l'un de l'autre de façon telle que des flux d'air, sortant desdits canaux (5, 6) de circulation d'air en empruntant les deux orifices (7, 8) de sortie d'air, s'écoulent conjointement en un flux d'air commun ; et un élément mobile de blocage (9, 10) respectivement affecté à chaque canal (5, 6) de circulation d'air et permettant de diminuer, de manière individuelle, les sections transversales de passage de l'air par les deux canaux (5, 6) de circulation d'air, **caractérisée par le fait que** ladite bouche d'aération (1) est équipée, pour chaque élément de blocage (9, 10), d'une commande (13) par came dotée d'un disque rotatif de commande (14, 15) présentant une came de commande (16, 17) qui est affectée à l'élément de blocage (9, 10) associé, et par laquelle l'élément de blocage (9, 10) considéré peut être mis en mouvement, sachant que les cames de commande (16, 17) sont balayées lors d'une rotation dudit disque de commande (14, 15).

2. Bouche d'aération (1) selon la revendication 1, **caractérisée par le fait que** les éléments de blocage (9, 10) sont pourvus d'éléments de commande (21) qui coopèrent avec la came de commande (16, 17) associée et se meuvent le long des cames de commande (16, 17) lors d'une rotation du disque de commande (14, 15), imprimant ainsi des mouvements auxdits éléments de blocage (9, 10).

3. Bouche d'aération (1) selon la revendication 1 ou 2, **caractérisée par le fait que** les cames de commande (16, 17) comportent des zones balayées en commun, par lesquelles elles meuvent un élément de blocage (9, 10) cependant qu'un autre élément de blocage (10, 9) est immobile ; et/ou **par le fait que** lesdites cames de commande (16, 17) comportent des zones balayées en commun, dans lesquelles elles impriment des mouvements dans le même sens aux deux éléments de blocage (9, 10) ; et/ou **par le fait que** lesdites cames de commande (16, 17) comportent des zones balayées en commun dans lesquelles elles impriment, aux deux éléments de blocage (9, 10), des mouvements dans des sens opposés.

4. Bouche d'aération (1) selon l'une ou plusieurs des revendications 1 à 3, **caractérisée par** un verrouillage rotatif mutuel des cames de commande (16, 17).

5. Bouche d'aération (1) selon l'une ou plusieurs des revendications précédentes, **caractérisée par le fait que** ladite bouche d'aération (1) comprend deux disques de commande (14, 15) coaxiaux, parmi lesquels un disque de commande (14, 15) respectif est muni d'une came de commande (16, 17) affectée à l'élément de blocage (9, 10) associé.

6. Bouche d'aération (1) selon l'une ou plusieurs des revendications précédentes, **caractérisée par le fait que** les éléments de blocage (9, 10) sont aptes à pivoter et se présentent, en particulier, comme des volets pivotants.
